# EUROPEAN PATENT APPLICATION

(11) **EP 1 188 508 A2**
(43) Date of publication of application: **20.03.2002**
(21) Application number: 01301558.1
(22) Date of filing: 21.02.2001
(51) Int. Cl.: B23K 20/12, B29C 65/06

(54) **Friction stir welding**

(30) Priority: 13.09.2000 JP 2000277551
(71) Applicant: Hitachi, Ltd., Chiyoda-ku, Tokyo 101-8010 (JP)
(72) Inventor: Ezumi, Masakuni c/o Hitachi, Ltd.,Intel.Prop.Group, ku Tokyo 100-8220 (JP); Fukuyori,Kazushige c/o Hitachi Kasado Kikai Co, Yamaguchi 744-0002 (JP); Matsunaga, Tetsuya c/o Hitachi Ltd Intel. Prop., Chiyoda-ku, Tokyo 100-8220 (JP)
(74) Representative: Paget, Hugh Charles Edward

(57) **Abstract**

End portions of members (10,20) are butted against each other with a trapezoidal convex portion (22) inserted into a trapezoidal concave portion (12). Friction stir welding is performed by inserting a rotary tool (50) from the side of upper convex portions (13,23). A small diameter portion of the rotary tool (50) is tapered, and is provided with a screw thread (51b). A large diameter portion (53) is provided by a member different from a shaft portion of the rotary tool (50) on which it is fixed. The screw thread (51b) of the screw portion extends into a recess of the end surface of the large diameter portion (53), so that stirring near this end surface can be performed sufficiently.

## Description

### FIELD OF THE INVENTION

The present invention relates to methods of friction stir welding and to rotary tools for use in friction stir welding.

### DESCRIPTION OF THE RELATED ART

Friction stir welding is a technique using a round shaft (here called a rotary tool) which is inserted into the welding region of two members and while rotating is moved along the junction line (welding line), thereby heating, mobilizing and plasticising the welding region, and realizing a solid-phase welding of the members. The rotary tool has a large diameter portion and a coaxial small diameter portion at the leading end thereof. The welding is performed by inserting the small diameter portion into the members to be welded, and bringing the end surface of the large diameter portion in contact with at least one of the members. A screw thread may be formed on the small diameter portion. The end surface of the large diameter portion at its leading end side may be concave. This technique is disclosed in Japanese Patent No. 2,712,838 (US 5,460,317), and Japanese Patent National Publication of PCT Application No. 9-508073 (EP 0752926).

### SUMMARY OF THE INVENTION

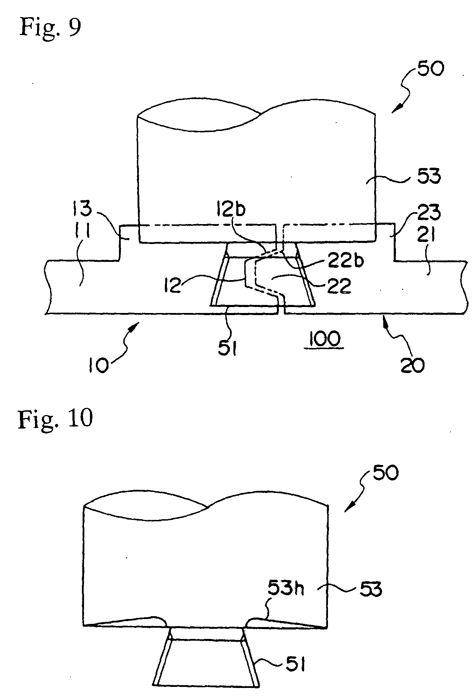

The case of friction stir welding of the butted region between two extruded members 10, 20 made of aluminum alloy will be considered, as is illustrated in FIG. 9. A trapezoidal concave portion 12, i.e. a recess extending along the welding line, is provided at the end surface of the face plate 11 of the member 10, and a trapezoidal convex portion 22, i.e. a corresponding projection extending along the welding line, is provided at the end surface of the face plate 21 of the member 20. The convex portion 22 is inserted into the concave portion 12. The concave portion 12 and the convex portion 22 have the trapezoid shape to simplify insertion. Also, the end portions of the members 10, 20 are provided with second convex portions or ribs 13, 23 projecting upwardly and extending adjacent the welding line. In the case where the members 10, 20 are portions of a car body of a railway car, the welded length of the materials 10, 20 may be approximately 20 m. Therefore, the members 10, 20 at the butted region tend to lose co-planarity. In order to prevent such a situation, the end surfaces of the butted region are provided with the concave portion 12 and the convex portion 22, and are fitted against each other.

Friction stir welding is performed by inserting a small diameter portion 51 of a rotary tool 50 from above, and inserting the end surface of the large diameter portion 53 (end surface on the small diameter portion 51 side) into the second convex portions 13, 23, and rotating and moving the rotary tool 50 along the butted region, as is illustrated in FIG. 9, where reference number 100 indicates a bed for fixing the members 10, 20.

The rotary tool 50 used for welding is shown in FIG. 10. The rotary tool 50 has a small diameter portion 51 at the leading end of the large diameter portion 53. The small diameter portion 51 has a tapered shape having larger diameter towards its leading end. This is to stir the butted region of the concave portion 12 and the convex portion 22 sufficiently. The tapered surface of the small diameter portion 51 is provided with a male screw thread. The end surface 53h at the leading end of the large diameter portion 53 has an annular concavity.

The small diameter portion 51 at its end in the vicinity of the large diameter portion 53 is not provided with the screw thread. This is because it is difficult to provide the screw at the tapered small diameter portion 51 at this end.

In FIG. 9, the region of the small diameter portion 51 without the screw thread is placed at the position of the upper slopes (called sides) 12b, 22b of the trapezoidal concave and convex portions 12, 22. Therefore, the stirring in this region tends to be insufficient. When stirring is insufficient, it may have an influence on the strength of the joint. If the material to be welded is aluminum alloy, the surface of the materials 10, 20 tends to be oxidized. When stirring is insufficient, this metal oxide may have a bad influence on strength.

The object of the present invention is to provide a friction stir welding method that can provide good welding at the butted region where the concave portion and convex portion are fitted together.

The present invention is characterized in performing friction stir welding by positioning a screw thread to the fitted region of the concave portion and the convex portion.

### BRIEF DESCRIPTION OF THE DRAWINGS

FIG. 1 is a longitudinal cross-sectional view during welding according to one embodiment of the present invention;
FIG. 2 is a side view of the rotary tool used in the method of FIG. 1;
FIG. 3 is a disassembled longitudinal cross-sectional view of the rotary tool of FIG. 2;
FIG. 4 is a longitudinal cross-sectional view of the pair of extruded members in FIG. 1;
FIG. 5 is a perspective view of a car body of a railway car;
FIG. 6 is a longitudinal cross-sectional view during welding according to another embodiment of the present invention;
FIG. 7 is a disassembled longitudinal cross-sectional view of the rotary tool used in the method of FIG. 6;
FIG. 8 is a longitudinal cross-sectional view during assembling of the rotary tool used in FIG. 6;
FIG. 9 is a longitudinal cross-sectional view during welding according to a known technique; and
FIG. 10 is a longitudinal cross-sectional view of a known rotary tool.

### DETAILED DESCRIPTION OF PREFERRED EMBODIMENTS

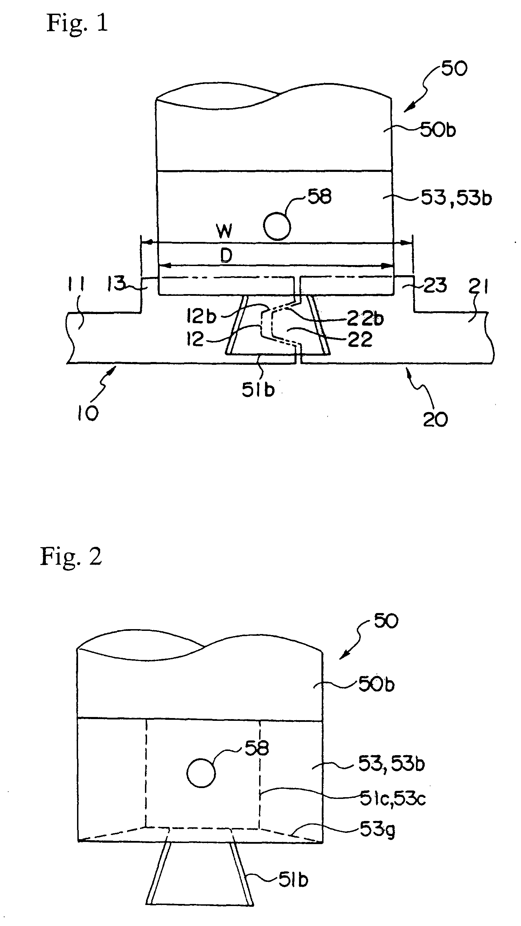

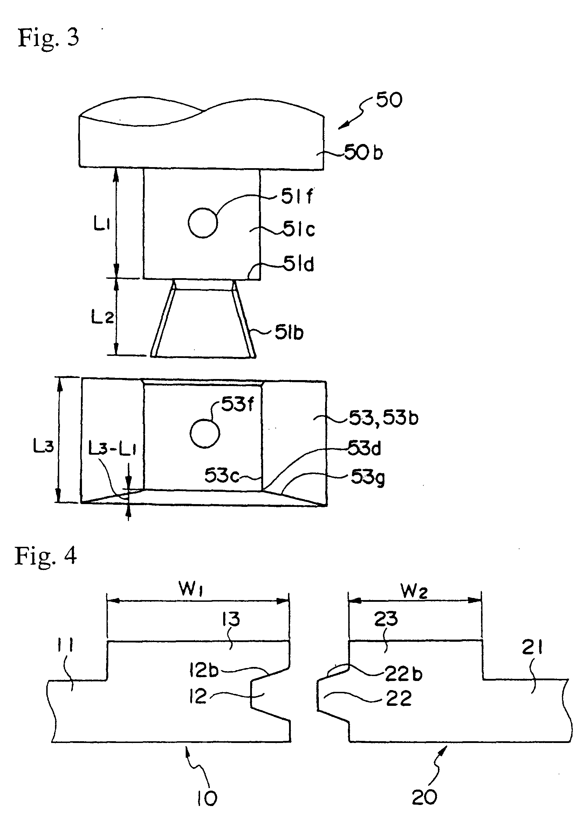

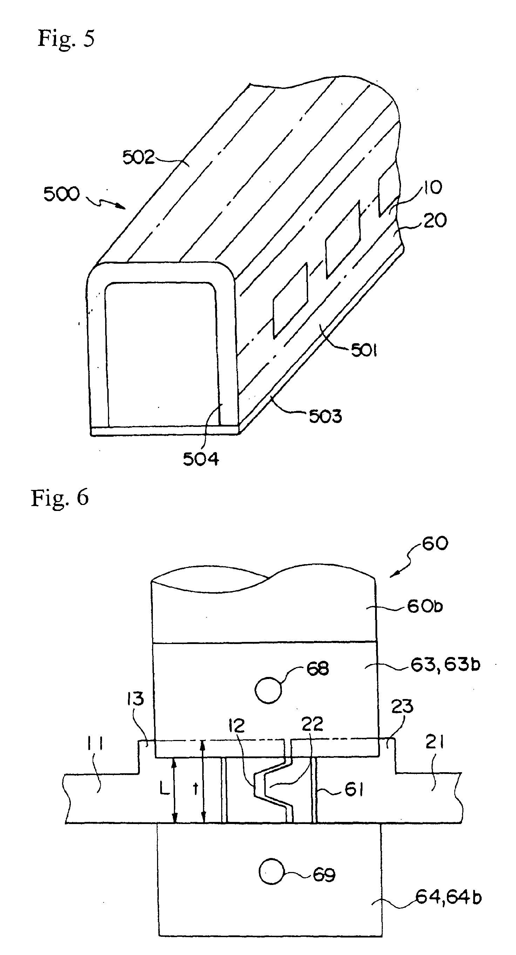

A preferred embodiment of the present invention will now be explained with reference to FIG. 1 through FIG. 5. A car body 500 of a railway car shown in Fig. 5 is comprised of side structures 501 constituting the sides, a roof structure 502 constituting the roof, an underframe 503 constituting the floor, and an end structure 504 constituting the end portion in the longitudinal direction. The side structure 501, the roof structure 502, and the underframe 503 are each formed by welding plural extruded members 10, 20, respectively. The longitudinal direction (extrusion direction) of the extruded members 10, 20 is in the longitudinal direction of the car body 500. The extruded members 10, 20 are made of aluminum alloy. There exists a plurality of strengthening ribs at the inner side of the car body, i.e. at the same side as the convex portions or ribs 13, 23. The strengthening ribs are not shown in the figures. The structure of the butted region of the members 10, 20 are as mentioned above with reference to FIG. 9.

The members of a rotary tool 50 are comprised of a round shaft 50b including the small diameter portion 51, and a member 53b for the large diameter portion 53. At the end portion of the small diameter portion of the round shaft 50b, from the leading end thereof, there is a screw portion 51b having a screw thread on the small diameter portion which tapers from its leading end, and an axis portion 51c for fixing the member 53b for the large diameter portion. The leading end of the screw portion 51b has the larger diameter. A pin hole 51f for fixing the member 53b for the large diameter portion is provided on the axis portion 51c.

The member 53b provides the large diameter portion 53, and is circular at its circumference. The member 53b has a hole 53c to be fitted to the axis portion 51c. The difference between the diameter of the axis portion 51c and the diameter of the hole 53c is small. The member 53b includes a pin hole 53f. The member 53b is inserted onto the axis portion 51c, and is fixed with a knock pin 58.

The end surface of the member 53b facing the screw portion 51b is provided with a concave face or inclined face 53g. The depth of the face 53g from the front end plane is deeper towards the screw portion 51b, and is shallower towards its outer peripheral portion. The recess formed by the face 53g holds the metal to be welded, and restricts the outflow of the metal from the end surface of the large diameter portion 53. This is similar to the concavity 53h shown in FIG. 9.

The length L1 of the axis portion 51c is shorter than the length L3 of the member 53b. The length L2 of the screw portion 51b is longer than the length of the known screw portion 51 of FIG. 9 by the calculation of the difference (L3 - L1). The length of the screw is elongated relative to the increase of the length L2 of the screw portion 51b. The end portion 53d at the inner diameter side of the concave face 53g of the member 53b is positioned at the end surface 51d of the axis portion 51c. Therefore, when the member 53b is mounted to the axis portion 51c, a portion of the screw is positioned inside the recess defined by the concave face 53g. Or, the screw is positioned in the vicinity of the end portion in the axial direction of the outer peripheral portion of the member 53b.

The diameter D of the large diameter portion 53 is smaller than the sum width W of the width W1 and W2 of the two upstanding convex portions or ribs 13, 23. The metal of the convex portions 13, 23 becomes the source for filling the gap at the butted region between the two members 10, 20. Also, during friction stir welding, the lowermost end of the large diameter portion 53 is positioned inside the convex portions 13, 23. Although the large diameter portion 53 is positioned inside the convex portions 13, 23, the lowermost end of the large diameter portion 53 is positioned above the level of the upper surfaces of the face plates 11, 21 (other than at the convex portions 13, 23). As is known in the art, the axis of rotation of the rotary tool 50 is inclined, e.g. by a few degrees, relative to its direction of movement along the welding line. The axis of rotation is inclined so that its axial centre at the side of the small diameter portion 51 is moved forward in the direction of movement along the welding line than the axial centre on the side of the large diameter portion 53. The lowermost end at the rear end of the lower end of the large diameter portion 53 is thus positioned inside the convex portions 13, 23.

The friction stir welding is performed by placing the axial centre of the rotary tool 50 at approximately the centre of the concave portion 12 in the width direction. Therefore, the width W1 of the convex portion 13 is larger than the width W2 of the convex portion 23. A driving device for rotating and moving the tool is applied at the upper end of the round shaft 50b.

With this structure of the tool 50, the screw thread of screw portion 51b is formed to the vicinity of the end surface of the large diameter portion (end surface on the side of the screw portion 51b, the base end side of the screw portion 51b). Therefore, the upper slopes (called sides) 12b, 22b of the butted trapezoid portion are stirred with the screw, so as to be stirred in the axial direction. Therefore, the problem concerning strength arising from the metal oxide is inhibited.

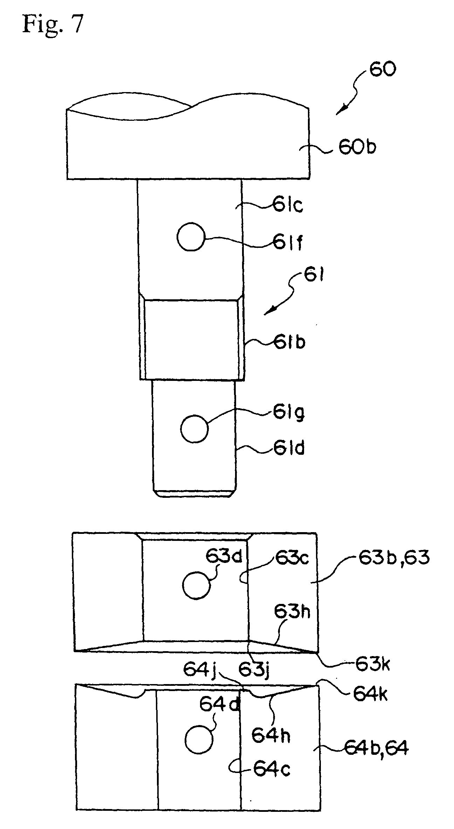

In the above-mentioned embodiment, the screw portion 51b is tapered. However, even in the case of the non-tapered (called linear) screw portion 51b, the similar problem occurs because it is difficult to form the screw to the vicinity of the recessed end surface of the large diameter portion 53. Therefore, the large diameter portion should be formed as an independent member, even in the case of linear screw portion, as is illustrated in FIG. 7.

In the above embodiment, the large diameter portion 53b is connected with the pin 58. However, it may be fixed by shrinking. Moreover, the large diameter portion 53b may be fixed by forming a screw to the axis portion 51c, and screwing thereto. In this case, the screw should be a reverse screw opposite to the direction of rotation.

Furthermore, in the case of performing welding using a known rotary tool 50 having no screw near the end surface of the large diameter portion 53, the upper slopes 12b, 22b of the trapezoid of the concave portion 12 and convex portion 22 are adjusted to the position of the screw of the small diameter portion 51.

Also, the upper slopes 12b, 22b of the trapezoid of the concave portion 12 and convex portion 22 are provided inside the convex portions 13, 23, and welding is performed using a conventional rotary tool 50 having no screw near the end surface of the large diameter portion 53. Subsequently, in order to eliminate the incompletely stirred portion therefrom, the convex portions 13, 23 are cut off. By doing so, an insufficiently stirred zone does not exist in the remaining portion, so that there is no problem concerning strength. Consequently a good weld is obtained.

Another embodiment shown in FIG. 6 through FIG. 9 will now be explained. In this embodiment large diameter portions 63, 64 are provided at both ends of the screw portion 61b of the small diameter portion 61, and friction stir welding is carried out by interposing the butted region between the two large diameter portions 63, 64.

The rotary tool 60 is comprised of a round shaft 60b including a small diameter portion 61, and members 63b, 64b for large diameter portions 63, 64. The members 63b, 64b are fixed to the axis portions 61c, 61d of the round shaft 60b with knock pins. The small diameter portion 61 is provided with, from its leading end, the axis portion 61d for fixing the member 64b, a screw portion 61b, and the axis portion 61c for fixing the member 63b. The screw portion 61b is linear. The diameter of the axis portion 61c is identical to that of the screw portion 61b. The diameter of the axis portion 61d is smaller than that of the screw portion 61b. The length of the screw thread of the screw portion 61b is longer than the length L. The position of the screw portion 61b depends on the shape of the concave faces 63h, 64h. There are provided pin holes 61f, 61g in the axis portions 61c, 61d.

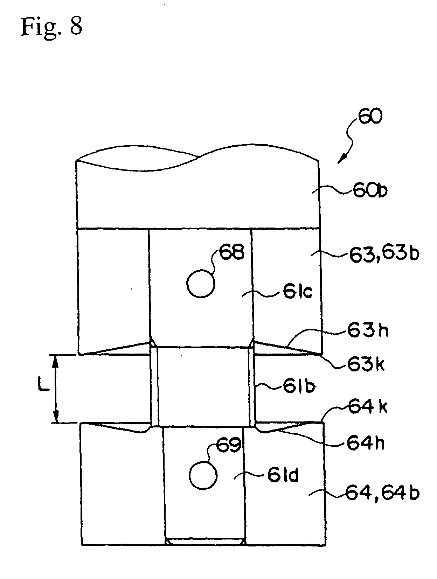

The members 63b, 64b include holes 63c, 64c having the diameter fitting with the axis portions 61c, 61d. The difference between the diameter of the axis portions 61c, 61d and that of the holes 63c, 64c is small. There are provided pin holes 63d, 64d in the members 63b, 64b. The members 63b, 64b are provided with concave faces 63h, 64h, having the similar object as the aforementioned concave faces 53h, 53g, at their end surfaces facing the screw portion 61b. The end portions 63j, 64j at the inner diameter side of the concaves 63h, 64h are in a recessed position relative to axial ends 63k, 64k at the outer peripheral side of the members 63b, 64b. By doing so, the end portion of the screw on the side of the large diameter portion 63 is positioned inside the recess given by the concave face 63h of the large diameter portion 63, as is illustrated in the assembly view of FIG. 8. The end portion of the screw on the side of the large diameter portion 64 is positioned inside the recess provided by the concave face 64h of the large diameter portion 64.

Upon welding, the lower end of the large diameter portion 63 is inserted into the convex portions 13, 23, as is the case in the aforementioned embodiment. The rotary tool 60 is inclined, as described for the aforementioned embodiment. The front end of the large diameter portion 64 of the leading end on the screw portion 61b side is inserted into the lower portion of the face plates 11, 21. When performing friction stir welding, the metal is slightly raised against the lower surface of the face plates 11, 21 at the rearward of the large diameter portion 64. When using the lower surface of the face plates 11, 21 as the outer surface of the car body, the raised metal mentioned above is cut off to obtain a flat surface.

By this method, the upper slopes 12b, 22b of the trapezoid portion can be sufficiently stirred. Also, the lower side of the face plates 11, 21 can be sufficiently stirred. Therefore, the whole range of the butted region of the face plates 11, 21 can be sufficiently stirred. In particular, the axial length of the screw thread of the small diameter portion extends over the full height of the convex and concave portions 12, 22.

In the embodiment of Fig. 7, the end portions 63j, 64j of the concave faces 63h, 64h on the inner diameter side are recessed inwardly relative to the peripheral end portions 63k, 64k of the large portions 63, 64. However, they may be at the identical axial position. Furthermore, the concave faces 63h, 64h may be formed nearer towards the end portion of the screw. Also, a screw thread may be formed on the axis portion 61c continuing from the screw portion 61b, in order to fix the large diameter portion 63 thereon. This could also be applied to a rotary tool having no large diameter portion at its leading end.

The technical scope of the present invention is not limited to the terms used in the claims or in the summary of the present invention, but is extended for example to the range in which a person skilled in the art could easily substitute based on the present disclosure.

## Claims

1. A friction stir welding method, comprising the steps of;
butting an end portion of a first member against an end portion of a second member;
inserting a convex portion projecting in the butting direction from said end portion of said first member into a concave portion formed in said end portion of said second member; and
friction stir welding using a rotary tool made of a large diameter portion and a small diameter portion adjacent the large diameter portion and equipped with a screw thread, by inserting said small diameter portion into said butted region, in such a manner that a part of the small diameter portion having said screw thread is inserted at the position of the side faces of said concave portion and said convex portion which are on the sides thereof closer to said large diameter portion of the rotary tool.

2. A friction stir welding method according to claim 1, wherein:
said concave portion and said convex portion both have a trapezoid-shape; and
said side faces of said concave portion and said convex portion are slopes of said trapezoid-shape thereof, and said friction stir welding is performed with said screw thread positioned at said slopes on the side towards the large diameter portion.

3. A friction stir welding method, comprising the steps of;
butting an end portion of a first member against an end portion of a second member;
inserting a convex portion projecting in the butting direction from said end portion of said first member into a concave portion formed in said end portion of said second member; and
friction stir welding using a rotary tool provided with a large diameter portion of a member different from that of a small diameter portion on an axis portion on one end of said small diameter portion, the small diameter portion being equipped with a screw thread, by inserting said small diameter portion into said butted region, in a manner such that a part of the small diameter portion having said screw thread is inserted at the position of the sides of said concave portion and said convex portion closer to said large diameter portion.

4. A friction stir welding method according to claim 3, wherein:
said concave portion and said convex portion both have a trapezoid-shape; and
said sides of said concave portion and said convex portion are slopes of said trapezoid-shape of said concave portion and said convex portion, and said friction stir welding is performed in with said screw thread positioned at said slopes.

5. A friction stir welding method according to claim 3, wherein:
said small diameter portion of the rotary tool is tapered with its larger diameter at its end side remote from the large diameter portion; and
an end surface of said large diameter portion on said small diameter portion side thereof is concave.

6. A friction stir welding method, comprising the steps of;
butting an end portion of a first member against an end portion of a second member;
providing a rotary tool, with a large diameter portion of a member different from that of a small diameter portion provided on an axis portion on one end of said small diameter portion, the small diameter portion being equipped with a screw thread, with the surface of said large diameter portion facing said small diameter portion having a recess, and with an end portion of said screw thread being positioned inside said recess; and
friction stir welding by inserting said small diameter portion into said butted region.

7. A friction stir welding method, comprising the steps of;
butting an end portion of a first member against an end portion of a second member;
providing a rotary tool having a small diameter portion equipped with a screw thread adjacent the leading end of a first large diameter portion, and providing a second large diameter portion as a member different from that of said small diameter portion on an axis portion at the leading end of said small diameter portion, wherein the end surfaces of both said large diameter portions facing said small diameter portion are recessed; and
friction stir welding by interposing said butted region between said first and second large diameter portions.

8. A friction stir welding method according to claim 7, wherein:
said end portion of said first member includes a trapezoid-shaped convex portion projecting in the butting direction, and said end portion of said second member includes a trapezoid-shaped concave portion inserted in said convex portion; and
friction stir welding is performed in the state where a part of said small diameter portion having said screw thread is inserted at the position of sides of said concave portion and said convex portion on at least the side of the joint region towards said first large diameter portion.

9. A friction stir welding method according to claim 7, wherein an end portion of said screw thread is inside the recess of said second large diameter portion.

10. A friction stir welding method according to claim 7, wherein said first large diameter portion and said small diameter portion are provided by different members, and an end portion of said screw is inside said recess of said first large diameter portion.

11. A friction stir welding method, comprising the steps of:
butting an end portion of a first member having a first convex portion projecting in the thickness direction against an end portion of a second member also having a first convex portion projecting in the thickness direction;
inserting a second convex portion projecting in the butting direction provided on said end portion of said first member into a concave portion provided on said end portion of said second member;
friction stir welding using a rotary tool having a large diameter portion and a small diameter portion equipped with a screw thread, by inserting said small diameter portion into said butted region, in a manner such that said large diameter portion is inserted into each of said first convex portions of said first member and said second member; and
cutting off remaining portions of said first convex portions of said first member and said second member, subsequently to the friction stir welding.

12. A friction stir welding method, comprising the steps of:
butting an end portion of a first member against an end portion of a second member;
inserting a convex portion projecting in the butting direction from said end portion of said first member into a concave portion provided in said end portion of said second member; and
friction stir welding while positioning the axial centre of a rotary tool at approximately the centre of said concave portion in its depth direction.

13. A rotary tool for friction stir welding, wherein:
said rotary tool is comprised of a small diameter portion equipped with a screw thread, and a large diameter portion of a different member provided on an axis portion of said small diameter portion;
the surface of said large diameter portion on said small diameter portion side thereof has a recess; and
an end portion of said screw thread is inside said recess of said large diameter portion.

14. A rotary tool for friction stir welding according to claim 13, wherein:
an axis portion at the opposite end of the small diameter portion from said axis portion provided with the first said large diameter portion, is provided with a second large diameter portion provided by a different member;
the surface of said second large diameter portion on said small diameter portion thereof has a recess; and
an end portion of said screw thread is inside said recess of said large diameter portion.
